# EUROPEAN PATENT SPECIFICATION

(11) **EP 2 643 837 B1**
(45) Date of publication and mention of the grant of the patent: **04.03.2015**
(21) Application number: 10796474.4
(22) Date of filing: 25.11.2010
(51) Int. Cl.: H01B 3/44, C08K 5/07, C08K 5/17, H01B 17/34

(54) **ENERGY CABLE HAVING A VOLTAGE STABILIZED THERMOPLASTIC ELECTRICALLY INSULATING LAYER**
STROMKABEL MIT SPANNUNGSSTABILISIERTER THERMOPLASTISCHER ELEKTRISCH ISOLIERENDER SCHICHT
CÂBLE ÉLECTRIQUE COMPORTANT UNE COUCHE ÉLECTRIQUEMENT ISOLANTE THERMOPLASTIQUE ET STABILISÉE EN TENSION

(43) Date of publication of application: 02.10.2013
(73) Proprietor: Prysmian S.p.A., 20126 Milano (IT)
(72) Inventor: PEREGO, Gabriele, I-20126 Milano (IT)
(74) Representative: Bottero, Carlo
(86) International application number: PCT/IB2010/003037
(87) International publication number: WO 2012/069864

(56) References cited:
- EP-A1- 2 163 576
- WO-A1-01/08166
- WO-A1-02/27731
- US-A1- 2004 038 030

## Description

### Background of the invention

The present invention relates to an energy cable. In particular, the present invention relates to a cable for transporting or distributing electric energy, especially medium or high voltage electric energy, said cable having at least one thermoplastic electrically insulating layer.

Cables for transporting electric energy generally include at least one cable core. The cable core is usually formed by at least one conductor sequentially covered by an inner polymeric layer having semiconductive properties, an intermediate polymeric layer having electrically insulating properties, an outer polymeric layer having semiconductive properties. Cables for transporting medium or high voltage electric energy generally include at least one cable core surrounded by at least one screen layer, typically made of metal or of metal and polymeric material. The screen layer can be made in form of wires (braids), of a tape helically wound around the cable core or a sheet longitudinally surrounding the cable core. The polymeric layers surrounding the at least one conductor are commonly made from a polyolefin-based crosslinked polymer, in particular crosslinked polyethylene (XLPE), or elastomeric ethylene/propylene (EPR) or ethylene/propylene/diene (EPDM) copolymers, also crosslinked, as disclosed, e.g., in WO 98/52197. The crosslinking step, carried out after extruding the polymeric material onto the conductor, gives the material satisfactory mechanical and electrical properties even under high temperatures both during continuous use and with current overload.

To address requirements for materials which should not be harmful to the environment both during production and during use, and which should be recyclable at the end of the cable life, energy cables have been recently developed having a cable core made from thermoplastic materials, i.e. polymeric materials which are not crosslinked and thus can be recycled at the end of the cable life.

In this respect, electrical cables comprising at least one coating layer, for example the insulation layer, based on a polypropylene matrix intimately admixed with a dielectric fluid are known and disclosed in WO 02/03398, WO 02/27731, WO 04/066317, WO 04/066318, WO 07/048422, and WO 08/058572. The polypropylene matrix useful for this kind of cables comprises polypropylene homopolymer or copolymer or both, characterized by a relatively low cristallinity such to provide the cable with the suitable flexibility, but not to impair the mechanical properties and thermopressure resistance at the cable operative and overload temperatures. Performance of the cable coating, especially of the cable insulating layer, is also affected by the presence of the dielectric fluid intimately admixed with said polypropylene matrix. The dielectric fluid should not affect the mentioned mechanical properties and thermopressure resistance and should be such to be intimately and homogeneously admixed with the polymeric matrix.

In the field of energy cables having as insulating layer a crosslinked polyolefin composition, such as crosslinked polyethylene (XLPE) or crosslinked elastomeric ethylene/propylene (EPR) or ethylene/propylene/diene (EPDM) copolymers, it is known, in order to improve electrical performance, particularly dielectric strength, to add to the material forming the insulating layer small quantities of additives commonly known as "voltage stabilizers", which should be able to reduce the adverse effects on dielectric strength caused by defects, such as voids, protrusion, and contaminants, which usually form in the insulating layer during extrusion.

For instance, International Patent Application WO 01/08166 relates to electrical cables having at least one polyolefin-based insulating covering layer, particularly made from XLPE, which comprises at least one voltage stabilizer which is a benzophenone substituted with at least one group selected from alkyl, arylalkyl and alkylaryl, wherein the said group: a) is linked to a phenyl ring of the benzophenone directly or via an oxygen bridge (-O-); b) contains, optionally, one or more oxygen bridges (-O-); and c) is optionally linked to a phenyl ring of at least one other benzophenone group, provided that when said at least one group is an alkyl, optionally substituted, the carbon atom of the said alkyl which is directly linked to a phenyl ring of the said benzophenone is tertiary. The above benzophenone derivatives are substantially inert towards commonly used cross-linking agents, such as organic peroxides, thus avoiding phenomena of inhibition of the cross-linking reaction and/or alteration or destruction of the additive itself during the cross-linking process.

U.S. Patent No. 4,870,121 relates to an article, or apparatus, used in high-voltage (HV) applications, the apparatus including a polymeric dielectric material not normally exposed to sunlight. The dielectric material comprises an ultraviolet (UV) light stabilizer present in sufficient quantity as to retard the degradation of the polymeric material resulting from the UV radiation produced by the electric field carried in the apparatus and thereby extending the time to initiation of electrical treeing in the dielectric material. The resistance to treeing is promoted and enhanced by reducing the concentration of oxygen in the material. The apparatus can be one selected from the group consisting of underground cables, undersea cables, HV switches, transformers, capacitors and other equipment, the insulation of which is not normally exposed to sunlight. The polymeric dielectric material included in the apparatus is preferably one selected from the group comprising: polyolefins such as low density polyethylene, or ethylene-propylene-diene terpolymer (EPDM), ethylene propylene rubber and epoxy resins. The ultraviolet light stabilizer is selected from the group comprising: benzotriazoles, hindered amine light stabilizers, nickel chelates and substituted benzophenones.

### Summary of the invention

The Applicant has faced the problem of improving the electrical performance of energy cables, especially in terms of dielectric breakdown strength, particularly for high voltage (HV) power transmission applications, having a thermoplastic coating based on polypropylene intimately admixed with a dielectric fluid, as electrically insulating layer.

In order to solve the above problem, the Applicant has considered the possibility of supplementing the electrically insulating layer with an additive acting as a voltage stabilizer, without influencing the other properties of the insulating material and particularly without negatively affecting the delicate balance of properties achieved by the combination of the thermoplastic polymer with the dielectric fluid.

The Applicant has found that the addition of a voltage stabilizer selected from substituted benzophenones and hindered amines to an electrically insulating layer based on a thermoplastic polymer material intimately admixed with a dielectric fluid can achieve the sought and other aims when the dielectric fluid is an aromatic dielectric fluid having a ratio of number of aromatic carbon atoms to total number of carbon atoms greater than or equal to 0.3.

Without being bound to any theory to explain the present invention, it is believed that the above compounds are particularly effective as voltage stabilizers for polypropylene-based electrically insulating materials since they are highly soluble in the aromatic dielectric fluid as defined above, therefore they are able to migrate through the insulating material by taking advantage of the dielectric fluid as medium, to reach and fill the microscopical defects responsible for premature electrical breakdown.

Therefore, according to a first aspect the present invention relates to a cable comprising at least one electrical conductor and at least one electrically insulating layer surrounding said electrical conductor, wherein the at least one electrically insulating layer comprises:
(a) a thermoplastic polymer material selected from:
   - at least one copolymer (i) of propylene with at least one olefin comonomer selected from ethylene and an α-olefin other than propylene, said copolymer having a melting point greater than or equal to 130°C and a melting enthalpy of from 20 J/g to 90 J/g;
   - a blend of at least one copolymer (i) with at least one copolymer (ii) of ethylene with at least one α-olefin, said copolymer (ii) having a melting enthalpy of from 0 J/g to 70 J/g;
   - a blend of at least one propylene homopolymer with at least one copolymer (i) or copolymer (ii);
   at least one of copolymer (i) and copolymer (ii) being a heterophasic copolymer;
(b) at least one dielectric fluid intimately admixed with the thermoplastic polymer material, said at least one dielectric fluid being an aromatic dielectric fluid having a ratio of number of aromatic carbon atoms to total number of carbon atoms greater than or equal to 0.3;
(c) at least one voltage stabilizer selected from substituted benzophenones and hindered amines.

For the purpose of the present description and of the claims that follow, except where otherwise indicated, all numbers expressing amounts, quantities, percentages, and so forth, are to be understood as being modified in all instances by the term "about". Also, all ranges include any combination of the maximum and minimum points disclosed and include any intermediate ranges therein, which may or may not be specifically enumerated herein.

In the present description and in the subsequent claims, as "conductor" it is meant an electrically conducting element usually made from a metallic material, more preferably aluminum, copper or alloys thereof, either as a rod or as a stranded multi-wire, or a conducting element as above coated with a semiconductive layer.

For the purposes of the invention the term "medium voltage" generally means a voltage of between 1 kV and 35 kV, whereas "high voltage" means voltages higher than 35 kV.

As "electrically insulating layer" it is meant a covering layer made of a material having insulating properties, namely having a dielectric rigidity (dielectric breakdown strength) of at least 5 kV/mm, preferably greater than 10 kV/mm.

As "semiconductive layer" it is meant a covering layer made of a material having semiconductive properties, such as a polymeric matrix added with, e.g., carbon black such as to obtain a volumetric resistivity value, at room temperature, of less than 500 Ω·m, preferably less than 20 Ω·m. Typically, the amount of carbon black can range between 1 and 50% by weight, preferably between 3 and 30% by weight, relative to the weight of the polymer.

With "heterophasic copolymer" it is meant a copolymer in which elastomeric domains, e.g. of ethylene-propylene elastomer (EPR), are dispersed in a propylene homopolymer or copolymer matrix.

Preferably, the thermoplastic polymer material (a) has a melt flow index (MFI), measured at 230°C with a load of 21.6 N according to ASTM Standard D1238-00, of from 0.05 dg/min to 10.0 dg/min, more preferably from 0.4 dg/min to 5.0 dg/min.

The olefin comonomer in copolymer (i) can be ethylene or an α-olefin of formula CH₂=CH-R, wherein R is a linear or branched C₂-C₁₀ alkyl, selected, for example, from: 1-butene, 1-pentene, 4-methyl-1-pentene, 1-hexene, 1-octene, 1-decene, 1-dodecene, or mixtures thereof. Propylene/ethylene copolymers are particularly preferred.

The olefin comonomer in copolymer (i) is preferably present in an amount equal to or lower than 15 mol%, more preferably equal to or lower than 10 mol%.

The olefin comonomer in copolymer (ii) can be an olefin of formula CH₂=CHR, wherein R represents a linear or branched alkyl group containing from 1 to 12 carbon atoms. Preferably, said olefin is selected from propylene, 1-butene, isobutylene, 1-pentene, 4-methyl-1-pentene, 1-hexene, 1-octene, 1-dodecene, or mixtures thereof. Propylene, 1-hexene and 1-octene are particularly preferred.

According to a preferred embodiment, copolymer (i) or copolymer (ii) is a random copolymer. With "random copolymer" it is meant a copolymer in which the comonomers are randomly distributed along the polymer chain.

Advantageously, in copolymer (i) or copolymer (ii) or both, when heterophasic, an elastomeric phase is present in an amount equal to or greater than 45 wt% with respect to the total weight of the copolymer.

Particularly preferred heterophasic copolymers (i) or (ii) are those wherein the elastomeric phase consists of an elastomeric copolymer of ethylene and propylene comprising from 15 wt% to 50 wt% of ethylene and from 50 wt% to 85 wt% of propylene with respect to the weight of the elastomeric phase.

Preferred copolymers (ii) are heterophasic propylene copolymers, in particular:
(ii-a) copolymers having the following monomer composition: 35 mol%-90 mol% of ethylene; 10 mol%-65 mol% of an aliphatic α-olefin, preferably propylene; 0 mol%-10 mol% of a polyene, preferably a diene, more preferably, 1,4-hexadiene or 5-ethylene-2-norbornene (EPR and EPDM rubbers belong to this class);
(ii-b) copolymers having the following monomer composition: 75 mol%-97 mol%, preferably 90 mol%-95 mol%, of ethylene; 3 mol%-25 mol%, preferably 5 mol%-10 mol%, of an aliphatic α-olefin; 0 mol%-5 mol%, preferably 0 mol%-2 mol%, of a polyene, preferably a diene (for example ethylene/1-octene copolymers).

Heterophasic copolymers can be obtained by sequential copolymerization of: 1) propylene, possibly containing minor quantities of at least one olefin comonomer selected from ethylene and an α-olefin other than propylene; and then of: 2) a mixture of ethylene with an α-olefin, in particular propylene, optionally with minor portions of a polyene.

The term "polyene" generally means a conjugated or non-conjugated diene, triene or tetraene. When a diene comonomer is present, this comonomer generally contains from 4 to 20 carbon atoms and is preferably selected from: linear conjugated or non-conjugated diolefins such as, for example, 1,3-butadiene, 1,4-hexadiene, 1,6-octadiene, and the like; monocyclic or polycyclic dienes such as, for example, 1,4-cyclohexadiene, 5-ethylidene-2-norbornene, 5-methylene-2-norbornene, vinylnorbornene, or mixtures thereof. When a triene or tetraene comonomer is present, this comonomer generally contains from 9 to 30 carbon atoms and is preferably selected from trienes or tetraenes containing a vinyl group in the molecule or a 5-norbomen-2-yl group in the molecule. Specific examples of triene or tetraene comonomers which may be used in the present invention are: 6,10-dimethyl-1,5,9-undecatriene, 5,9-dimethyl-1,4,8-decatriene, 6,9-dimethyl-1,5,8-decatriene, 6,8,9-trimethyl-1,6,8-decatriene, 6,10,14-trimethyl-1,5,9,13-pentadecatetraene, or mixtures thereof. Preferably, the polyene is a diene.

Preferably, copolymer (i), copolymer (ii) or both have a melting point of from 140°C to 180°C.

Preferably, copolymer (i) has a melting enthalpy of from 25 J/g to 80 J/g.

Preferably, copolymer (ii) has a melting enthalpy of from 10 J/g to 30 J/g.

Advantageously, when the thermoplastic material of the insulating layer comprises a blend of copolymer (i) and copolymer (ii) the latter has a melting enthalpy lower than that of the first.

Advantageously, when the thermoplastic material of the insulating layer comprises a blend of copolymer (i) and copolymer (ii), the ratio between copolymer (i) and copolymer (ii) is of from 1:9 to 8:2, preferably of from 2:8 to 7:3.

Advantageously, when the thermoplastic material of the insulating layer comprises a blend of a propylene homopolymer and at least one of copolymer (i) and copolymer (ii), the ratio between the propylene homopolymer and copolymer (i) or copolymer (ii) or both is of from 0.5:9.5 to 5:5, preferably from 1:9 to 3:7.

As to the dielectric fluid (b), high compatibility between the dielectric fluid and the polymer base material is necessary to obtain a microscopically homogeneous dispersion of the dielectric fluid in the polymer base material. The dielectric fluid suitable for forming the cable covering layer of the present invention should comprise no polar compounds or only a limited quantity thereof, in order to avoid a significant increase of the dielectric losses.

Preferably, the concentration by weight of said at least one dielectric fluid in said thermoplastic polymer material is lower than the saturation concentration of said dielectric fluid in said thermoplastic polymer material. The saturation concentration of the dielectric fluid in the thermoplastic polymer material may be determined by a fluid absorption method on Dumbell specimens as described, for example, in WO 04/066317.

By using the dielectric fluid in an amount as defined above, thermomechanical properties of the insulating layer are maintained and exudation of the dielectric fluid from the thermoplastic polymer material is avoided.

The at least one dielectric fluid is generally compatible with the thermoplastic polymer material. "Compatible" means that the chemical composition of the fluid and of the thermoplastic polymer material is such as to result into a microscopically homogeneous dispersion of the dielectric fluid into the polymer material upon mixing the fluid into the polymer, similarly to a plasticizer.

Generally, the weight ratio between the at least one dielectric fluid (b) and the thermoplastic polymer material (a) may be from 1:99 to 25:75, preferably from 2:98 to 15:85.

It has also to be noticed that the use of a dielectric fluid with a relatively low melting point or low pour point (e.g. a melting point or a pour point not higher than 80°C) allows an easy handling of the dielectric fluid which may be melted with no need of additional and complex manufacturing steps (e.g. a melting step of the dielectric fluid) and/or apparatuses for admixing the liquid with the polymer material.

According to a further preferred embodiment, the dielectric fluid has a melting point or a pour point of from -130°C to +80°C.

The melting point may be determined by known techniques such as, for example, by Differential Scanning Calorimetry (DSC) analysis.

According to a further preferred embodiment, the dielectric fluid has a predetermined viscosity in order to prevent fast diffusion of the liquid within the insulating layer and hence its outward migration, as well as to enable the dielectric fluid to be easily fed and mixed into the thermoplastic polymer material. Generally, the dielectric fluid of the invention has a viscosity, at 40°C, of from 10 cSt to 800 cSt, preferably of from 20 cSt to 500 cSt (measured according to ASTM standard D445-03).

The number of aromatic carbon atoms is intended to be the number of carbon atoms which are part of an aromatic ring.

A dielectric fluid according to the invention has a ratio of number of aromatic carbon atoms to total number of carbon atoms (hereinafter also referred to as Cₐᵣ/Cₜₒₜ) greater than or equal to 0.3. Preferably, Cₐᵣ/Cₜₒₜ is lower than 1. For example, Cₐᵣ/Cₜₒₜ is of from 0.4 to 0.9.

The ratio of number of aromatic carbon atoms to total number of carbon atoms of the dielectric fluids according to the invention is sign of aromaticity. Only in the presence of a dielectric fluid with this amount of aromaticity the voltage stabilizers of the invention are capable of performing their action, as it will be shown in the following of the description.

The ratio of number of aromatic carbon atoms with respect to the total number of carbon atoms may be determined according to ASTM standard D3238-95(2000)el.

Dielectric fluids particularly preferred for carrying out the present invention are those having an aniline point equal to or lower than 50°C. Aniline point is the minimum temperature for complete miscibility of equal volumes of aniline and the sample - a dielectric fluid, in the present case. It is be preferable for a dielectric fluid according to the invention to have an aniline point not lower than -50°C.

Examples of suitable dielectric fluids are: aromatic oils, either monocyclic, polycyclic (condensed or not) or heterocyclic (i.e. containing at least one heteroatom selected from oxygen, nitrogen or sulfur, preferably oxygen), wherein aromatic or heteroaromatic moieties are substituted by at least one alkyl group C₁-C₂₀, and mixtures thereof. When two or more cyclic moieties are present, such moieties may be linked by an alkenyl group C₁-C₅.

For example, the dielectric fluid comprises at least one alkylaryl hydrocarbon having the structural formula (I): 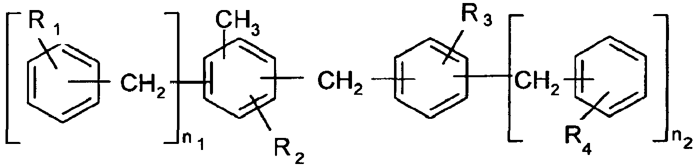 wherein:
R₁, R₂, R₃ and R₄, equal or different, are hydrogen or methyl;
n₁ and n₂, equal or different, are zero, 1 or 2, with the proviso that the sum n1+n2 is less than or equal to 3.

In another example, the dielectric fluid comprises at least one diphenyl ether having the following structural formula: 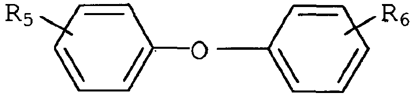 wherein R₅ and R₆ are equal or different and represent hydrogen, a phenyl group non-substituted or substituted by at least one alkyl group, or an alkyl group non-substituted or substituted by at least one phenyl. By alkyl group it is meant a linear or branched C₁-C₂₄, preferably C₁-C₂₀, hydrocarbon radical, with the proviso that the ratio of number of aromatic carbon atoms to total number of carbon atoms is greater than or equal to 0.3.

Suitable dielectric fluids for use in the cable of the invention are described, e.g., in WO 02/027731 and WO 02/003398, all in the Applicant's name.

The voltage stabilizers according to the present invention may be selected from substituted benzophenones and hindered amines.

Examples of substituted benzophenones suitable for the present invention are: 2,2'-dihydroxy-4,4'-diacryloxybenzophenone, 2,4-dihydroxy-benzophenone, 4,4'-dihydroxybenzophenone, 2,2'-dihydroxy-4,4'-dimethoxybenzophenone, 2,2'-dihydroxy-4-methoxybenzophenone, 4,4'-dimethoxybenzophenone, 2,4'-dimethylbenzophenone, 3,4'-dimethylbenzophenone, 3,4-dimethylbenzophenone, 2,5-dimethylbenzophenone, 4,4'-dimethylbenzophenone, 2-hydroxy-4-methoxybenzophenone, 2-hydroxy-4-methoxyphenyl-benzophenone, 2-hydroxy-4-acrlyoxybenzophenone, 2-hydroxy-4-octyloxy-benzophenone, 2-hydroxy-4-allyloxybenzophenone, 2,3,4,4'-tetrahydroxybenzophenone, 2,2',4,4'-tetrahydroxybenzophenone, 2,2',4-tri-hydroxybenzophenone, 2,3,4'-trihydroxy-benzophenone, 2,4,4'-trihydroxy-benzophenone, 2,4,6-trihydroxybenzophenone, 2,3,4-trimethoxybenzophenone, 2,4,5-tri-methoxybenzophenone, 2,4,6-trimethoxybenzophenone, and mixtures thereof.

As to the position of the substituent, 2-substituted benzophenones are particularly preferred. As to the nature of the substituent, hydroxy-benzophenones are particularly preferred.

According to a particularly preferred embodiment, the at least one voltage stabilizer is selected from 2-hydroxy-benzophenones.

Hindered amines particularly preferred for the present invention are, in particular, 2,2,6,6-tetramethyl piperidine derivatives. Examples of suitable hindered amines are:
bis(2,2,6,6,-tetramethyl-4-piperidyl)sebacate;
poly[[6-[(1,1,3,3-tetra-methylbutyl)amino]-1,3,5-triazine-2,4-diyl][(2,2,6,6-tetramethyl-4-piperidinyl)imino]-1,6-hexanediyl[(2,2,6,6-tetramethyl-4-piperidinyl)-imino]]);
1,6-Hexanediamine,N,N'-bis(2,2,6,6-tetramethyl-4-piperidinyl)-polymer with 2,4,6-trichloro-1,3,5-triazine, reaction products with N-butyl-1-butanamide and N-butyl-2,2,6,6-tetramethyl-4-piperidinimine (CAS 192268-64-7);
1,3,5-Triazine-2,4,6-triamine,N,N"'-[1,2-ethane-diyl-bis[[[4,6-bis-[butyl-(1,2,2,6,6-pentamethyl-4-piperidinyl)amino]-1,3,5-triazine-2-yl]imino]-3,1-propanedi-yl]] bis-[N',N"-dibutyl-N',N"-bis(1,2,2,6,6-pentamethyl-4-piperidinyl)- (CAS 106990-43-6);
dimethyl succinate polymer with 4-hydroxy-2,2,6,6-tetramethyl-1-piperidine ethanol;
bis-(1-octyloxy-2,2,6,6-tetra-methyl-4-piperidinyl)sebacate;
and mixtures thereof.

Preferably, said at least one voltage stabilizer is present in the electrically insulating layer in an amount of from 0.05 to 5% by weight, more preferably from 0.1 to 2% by weight, with respect to the total weight of the insulating layer.

Other components may be added in minor amounts to the thermoplastic polymer material according to the present invention, such as antioxidants, processing aids, water tree retardants, or mixtures thereof.

Conventional antioxidants suitable for the purpose are, for example, distearyl- or dilauryl-thiopropionate and pentaerythrityl-tetrakis [3-(3,5-di-t-butyl-4-hydroxyphen-yl)-propionate], or mixtures thereof.

Processing aids which may be added to the polymer composition include, for example, calcium stearate, zinc stearate, stearic acid, or mixtures thereof.

According to a preferred embodiment, the cable according to the present invention includes also at least one semiconductive layer. The semiconductive layer is preferably formed by a semiconductive material comprising components (a) and (b) as disclosed above, and optionally at least one voltage stabilizer (c), at least one conductive filler (d), preferably a carbon black filler.

The addition of a voltage stabilizer according to the invention to the material of a semiconductive layer does not substantially alter the electric performance of the layer, but can provide a further contribution to the voltage stabilization of the insulating layer, especially at the neighboring interface.

The at least one conductive filler is generally dispersed within the thermoplastic polymer material in a quantity such as to provide the material with semiconductive properties, namely to obtain a volumetric resistivity value, at room temperature, of less than 500 Ω·m, preferably less than 20 Ω·m. Typically, the amount of carbon black can range between 1 and 50% by weight, preferably between 3 and 30% by weight, relative to the weight of the polymer.

The use of the same base polymer composition for both the insulating layer and the semiconductive layers is particularly advantageous in producing cables for medium or high voltage, since it ensures excellent adhesion between adjacent layers and hence a good electrical behaviour, particularly at the interface between the insulating layer and the inner semiconductive layer, where the electrical field and hence the risk of partial discharges are higher.

The polymeric compositions for the cable according to the present invention may be produced by mixing together the thermoplastic polymer material, the dielectric fluid, the voltage stabilizer and any other optional additive, by using methods known in the art. Mixing may be carried out for example by an internal mixer of the type with tangential rotors (Banbury) or with interpenetrating rotors; in a continuous mixer of Ko-Kneader (Buss) type, of co- or counterrotating double-screw type; or in a single screw extruder.

According to a preferred embodiment, the dielectric fluid may be added to the thermoplastic polymer material during the extrusion step by direct injection into the extruder cylinder as disclosed, for example, in International Patent Application WO 02/47092 in the name of the Applicant.

Although the present description is mainly focused on cables for transporting or distributing medium or high voltage energy, the polymer composition of the invention may be used for coating electrical devices in general and in particular cable of different type, for example low voltage cables (i.e. cables carrying a voltage lower than 1 kV), telecommunications cables or combined energy/telecommunications cables, or accessories used in electrical lines, such as terminals, joints, connectors and the like.

### Brief description of the drawing

Further characteristics will be apparent from the detailed description given hereinafter with reference to the accompanying drawing, in which:

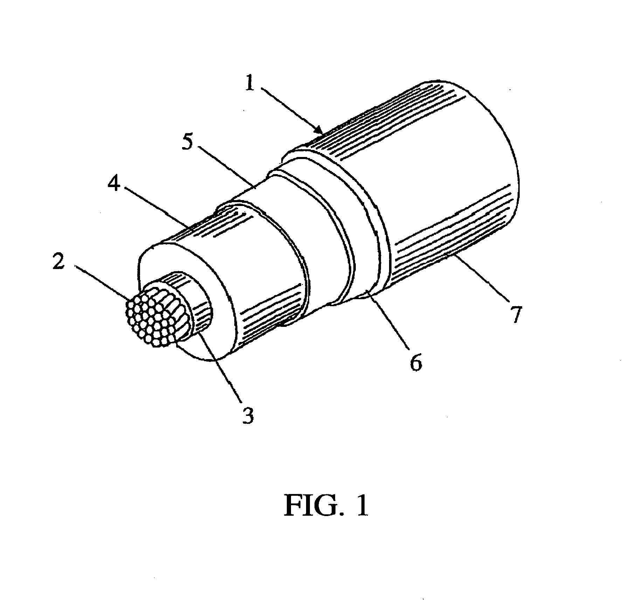

Figure 1 is a perspective view of an energy cable, particularly suitable for medium or high voltage, according to the invention.

### Detailed description of the preferred embodiments

In Figure 1, the cable (1) comprises a conductor (2), an inner layer with semiconductive properties (3), an intermediate layer with insulating properties (4), an outer layer with semiconductive properties (5), a metal screen layer (6) and a sheath (7).

The conductor (2) generally consists of metal wires, preferably of copper or aluminum or alloys thereof, stranded together by conventional methods, or of a solid aluminum or copper rod.

The insulating layer (4) may be produced by extrusion, around the conductor (2), of a composition according to the present invention.

The semiconductive layers (3) and (5) are also made by extruding polymeric materials usually based on polyolefins, preferably a composition according to the present invention, made to be semiconductive by adding at least one conductive filler, usually carbon black.

Around the outer semiconductive layer (5), a metal screen layer (6) is usually positioned, made of electrically conducting wires or strips helically wound around the cable core or of an electrically conducting tape longitudinally wrapped and overlapped (preferably glued) onto the underlying layer. The electrically conducting material of said wires, strips or tape is usually copper or aluminum or alloys thereof.

The screen layer (6) may be covered by a sheath (7), generally made from a polyolefin, usually polyethylene.

The cable can be also provided with a protective structure (not shown in Figure 1) the main purpose of which is to mechanically protect the cable against impacts or compressions. This protective structure may be, for example, a metal reinforcement or a layer of expanded polymer as described in WO 98/52197 in the name of the Applicant.

The cable according to the present invention may be manufactured in accordance with known methods, for example by extrusion of the various layers around the central conductor. The extrusion of two or more layers is advantageously carried out in a single pass, for example by the tandem method in which individual extruders are arranged in series, or by co-extrusion with a multiple extrusion head. The screen layer is then applied around the so produced cable core. Finally, the sheath according to the present invention is applied, usually by a further extrusion step.

The cable of the present invention is preferably used for alternating current (AC) power transmission.

Figure 1 shows only one embodiment of a cable according to the invention. Suitable modifications can be made to this embodiment according to specific technical needs and application requirements without departing from the scope of the invention.

The following examples are provided to further illustrate the invention.

### EXAMPLES 1-5.

The following compositions were prepared with the amounts reported in Table 1 (expressed as % by weight with respect to the total weight of the composition).

In all of the examples, the propylene copolymer was fed directly into the extruder hopper. Subsequently, the dielectric fluid, previously mixed with the antioxidants and the voltage stabilizer (if any), was injected at high pressure into the extruder. An extruder having a diameter of 80 mm and a L/D ratio of 25 was used. The injection was made during the extrusion at about 20 D from the beginning of the extruder screw by means of three injection points on the same cross-section at 120° from each other. The dielectric fluid was injected at a temperature of 70°C and a pressure of 250 bar.

**TABLE 1**

| EXAMPLE | 1 (*) | 2 | 3 | 4 (*) | 5 (*) |
|---|---|---|---|---|---|
| Polypropylene mixture | 94.0 | 93.5 | 93.5 | 94.0 | 93.5 |
| Marlotherm™ SH | 5.7 | 5.7 | 5.7 | -- | -- |
| Nyflex™ 210B | -- | -- | -- | 5.7 | 5.7 |
| Chimassorb™ 944 | -- | 0.5 | -- | -- | 0.5 |
| Chimassorb™ 81 | -- | -- | 0.5 | -- | -- |
| Antioxidant agent | 0.3 | 0.3 | 0.3 | 0.3 | 0.3 |

| | | | | | |
|---|---|---|---|---|---|
| (*) comparative Polypropylene mixture: 25/75 mixture of a propylene-ethylene random copolymer (melting enthalpy 65.1 J/g) and a propylene heterophasic copolymer (melting enthalpy 30 J/g); Marlotherm™ SH: dibenzyltoluene (DBT), ratio aromatic carbon atoms/total carbon atoms = 0.86 (Sasol Olefins & Surfactants GmbH); Nyflex™ 210B: naphthenic oil (3 %wt aromatic carbon atoms, 41 wt% naphthenic carbon atoms, 56 wt% paraffinic carbon atoms), ratio aromatic carbon atoms/total carbon atoms = 0.03 (Nynas AB) Chimassorb™ 944: poly[[6-[(1,1,3,3-tetramethylbutyl)amino]-1,3,5-triazine-2,4-diyl]-[(2,2,6,6-tetramethyl-4-piperidinyl)imino]-1,6-hexanediyl[2,2,6,6-tetramethyl-4-piperidinyl)imino]]) (Mn = 2000-3100): 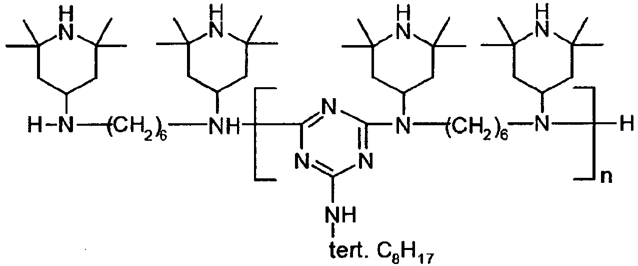 Chimassorb™ 81 : 2-hydroxy-4-(octyloxy)-benzophenone: 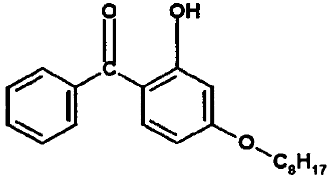 Antioxidant agent: 4,6-bis (octylthiomethyl)-o-cresol | | | | | |

.

The dielectric breakdown strength (DS) of sample cables (20 m long) having an insulating layer based on the composition of Examples 1-5 was evaluated in alternating current condition. The DS measurements were made by applying to these sample cables an alternating current at 50 Hz starting with a voltage of 50 kV and increasing in steps of 10 kV every 10 minutes until perforation of the test-piece occurred. Each measurement was repeated on 3 test-pieces. The values given in Table 2 are the arithmetic mean of the individual measured values.

**TABLE 2**

| EXAMPLE | Dielectric strength (kV/mm) |
|---|---|
| 1 (*) | 50 |
| 2 | 58 |
| 3 | 58 |
| 4 (*) | 50 |
| 5 (*) | 40 |

| | |
|---|---|
| (*) comparative | |

Cables of Examples 1 and 4 had an insulation not containing any voltage stabilizer. The insulation of Cable 1 comprised a dielectric fluid with a ratio Cₐᵣ/Cₜₒₜ greater than 0.3, according to the invention, whereas the insulation of Cable 4 comprised a dielectric fluid with a ratio Cₐ/Cₜₒₜ lower than 0.3, nonetheless these cables had a substantially similar dielectric strength that is apparently not influenced by the Cₐᵣ/Cₜₒₜ ratio of the dielectric fluid. Cables of examples 2 and 3 had an insulation containing a dielectric fluid with a ratio Cₐᵣ/Cₜₒₜ greater than 0.3, according to the invention, and a voltage stabilizer according to the invention (a substituted benzophenone in the case of Cable 3 and a hindered amine in the case of Cable 2). The dielectric strength of both Cable 2 and 3 substantially improved with respect to Cable 1 (having an insulation containing the same dielectric fluid, but no voltage stabilizer). Cable of Example 5 had an insulation containing a dielectric fluid with a ratio Cₐᵣ/Cₜₒₜ lower than 0.3 and as voltage stabilizer a hindered amine. The dielectric strength of Cable 5 was surprisingly lower with respect to Cable 4 (having an insulation containing the same dielectric fluid, but no voltage stabilizer).

The voltage stabilizers according to the invention can improve the dielectric strength of a cable having an insulation layer based on a thermoplastic material admixed with a dielectric fluid as from the present invention only when the dielectric fluid has a ratio Cₐᵣ/Cₜₒₜ greater than 0.3.

## Claims

1. A cable comprising at least one electrical conductor and at least one electrically insulating layer surrounding said electrical conductor, wherein the at least one electrically insulating layer comprises:
(a) a thermoplastic polymer material selected from:
- at least one copolymer (i) of propylene with at least one olefin comonomer selected from ethylene and an α-olefin other than propylene, said copolymer having a melting point greater than or equal to 130°C and a melting enthalpy of from 20 J/g to 90 J/g;
- a blend of at least one copolymer (i) with at least one copolymer (ii) of ethylene with at least one α-olefin, said copolymer (ii) having a melting enthalpy of from 0 J/g to 70 J/g;
- a blend of at least one propylene homopolymer with at least one copolymer (i) or copolymer (ii);
at least one of copolymer (i) and copolymer (ii) being a heterophasic copolymer;
(b) at least one dielectric fluid intimately admixed with the thermoplastic polymer material, said at least one dielectric fluid being an aromatic dielectric fluid having a ratio of number of aromatic carbon atoms to total number of carbon atoms greater than or equal to 0.3;
(c) at least one voltage stabilizer selected from substituted benzophenones and hindered amines.

2. The cable according to claim 1, wherein the copolymer (i) is a propylene/ethylene copolymer.

3. The cable according to claim 1, wherein, in the copolymer (i) or copolymer (ii) or both, when heterophasic, an elastomeric phase is present in an amount equal to or greater than 45 wt% with respect to the total weight of the copolymer.

4. The cable according to claim 1, wherein copolymer (i) has a melting enthalpy of from 25 J/g to 80 J/g.

5. The cable according to claim 1, wherein copolymer (ii) has a melting enthalpy of from 10 J/g to 30 J/g.

6. The cable according to claim 1, wherein the at least one dielectric fluid (b) has a ratio of number of aromatic carbon atoms to total number of carbon atoms of from 0.4 to 0.9.

7. The cable according to claim 1, wherein the at least one dielectric fluid has an aniline point equal to or lower than 50°C.

8. The cable according to claim 1, wherein the at least one dielectric fluid is selected from: monocyclic aromatic oils; condensed or uncondensed polycyclic aromatic oils; heterocyclic aromatic oils containing at least one heteroatom selected from oxygen, nitrogen or sulfur; said mono, poly or heterocyclic aromatic moieties being substituted by at least one alkyl group C₁-C₂₀; and mixtures thereof.

9. The cable according to claim 1, wherein the at least one voltage stabilizer (c) is selected from: 2,2'-dihydroxy-4,4'-diacryloxybenzophenone, 2,4-dihydroxy-benzophenone, 4,4'-dihydroxybenzophenone, 2,2'-dihydroxy-4,4'-dimethoxybenzophenone, 2,2'-dihydroxy-4-methoxybenzophenone, 4,4'-dimethoxybenzophenone, 2,4'-dimethylbenzophenone, 3,4'-dimethylbenzophenone, 3,4-dimethylbenzophenone, 2,5-dimethylbenzophenone, 4,4'-dimethylbenzophenone, 2-hydroxy-4-methoxybenzophenone, 2-hydroxy-4-methoxyphenyl-benzophenone, 2-hydroxy-4-acrlyoxybenzophenone, 2-hydroxy-4-octyloxy-benzophenone, 2-hydroxy-4-allyloxybenzophenone, 2,3,4,4'-tetrahydroxybenzophenone, 2,2',4,4'-tetrahydroxybenzophenone, 2,2',4-tri-hydroxybenzophenone, 2,3,4'-trihydroxy-benzophenone, 2,4,4'-trihydroxy-benzophenone, 2,4,6-trihydroxybenzophenone, 2,3,4-trimethoxybenzophenone, 2,4,5-tri-methoxybenzophenone, 2,4,6-trimethoxybenzophenone, and mixtures thereof.

10. The cable according to claim 1, wherein the at least one voltage stabilizer (c) is selected from 2-substituted benzophenones.

11. The cable according to claim 1, wherein the at least one voltage stabilizer (c) is selected from hydroxy-benzophenones.

12. The cable according to claim 11, wherein the at least one voltage stabilizer is selected from 2-hydroxy-benzophenones.

13. The cable according to claim 1, wherein the at least one voltage stabilizer (c) is selected from hindered amines.

14. The cable according to claim 13, wherein the at least one voltage stabilizer (c) is selected from: bis(2,2,6,6,-tetramethyl-4-piperidyl)sebacate; poly[[6-[(1,1,3,3-tetra-methylbutyl)amino]-1,3,5-triazine-2,4-diyl][(2,2,6,6-tetramethyl-4-piperidinyl)imino]-1,6-hexanediyl[(2,2,6,6-tetramethyl-4-piperidinyl)-imino]]); 1,6-hexanediamine,N,N'-bis(2,2,6,6-tetramethyl-4-piperidinyl)-polymer with 2,4,6-tri-chloro-1,3,5-triazine, reaction products with N-butyl-1-butanamide and N-butyl-2,2,6,6-tetramethyl-4-piperidinimine (CAS 192268-64-7); 1,3,5-triazine-2,4,6-triamine,N,N"'-[1,2-ethane-diyl-bis[[[4,6-bis-[butyl-(1,2,2,6,6-pentamethyl-4-piperidinyl)amino]-1,3,5-triazine-2-yl]imino]-3,1-propanedi-yl]] bis-[N',N"-dibutyl-N',N"-bis(1,2,2,6,6-penta-methyl-4-piperidinyl)- (CAS 106990-43-6); dimethyl succinate polymer with 4-hydroxy-2,2,6,6-tetramethyl-1-piperidine ethanol; bis-(1-octyloxy-2,2,6,6-tetra-methyl-4-piperidinyl)sebacate; and mixtures thereof.

15. The cable according to claim 1, wherein the at least one voltage stabilizer (c) is present in an amount of from 0.05 to 5% by weight with respect to the total weight of the insulating layer.

16. The cable according to claim 1, having at least one semiconductive layer comprising at least one voltage stabilizer selected from substituted benzophenones and hindered amines.

## Patentansprüche

1. Kabel, umfassend wenigstens einen elektrischen Leiter und wenigstens eine elektrisch isolierende Schicht, die den elektrischen Leiter umgibt, wobei die wenigstens eine elektrisch isolierende Schicht umfasst:
(a) ein thermoplastisches Polymermaterial, ausgewählt aus:
- wenigstens einem Copolymer (i) von Propylen mit wenigstens einem Olefin-Comonomer, ausgewählt aus Ethylen und einem anderen α-Olefin als Propylen, wobei das Copolymer einen Schmelzpunkt von 130 °C oder mehr und eine Schmelzenthalpie von 20 J/g bis 90 J/g aufweist;
- einer Mischung aus wenigstens einem Copolymer (i) mit wenigstens einem Copolymer (ii) von Ethylen mit wenigstens einem α-Olefin, wobei das Copolymer (ii) eine Schmelzenthalpie von 0 J/g bis 70 J/g aufweist;
- einer Mischung aus wenigstens einem Propylenhomopolymer mit wenigstens einem Copolymer (i) oder Copolymer (ii);
wobei wenigstens eines von Copolymer (i) und Copolymer (ii) ein heterophasisches Copolymer ist;
(b) wenigstens eine dielektrische Flüssigkeit, die innig vermischt ist mit dem thermoplastischen Polymermaterial, wobei die wenigstens eine dielektrische Flüssigkeit eine aromatische dielektrische Flüssigkeit mit einem Verhältnis der Zahl von aromatischen Kohlenstoffatomen zu der Gesamtzahl von Kohlenstoffatomen von 0,3 oder mehr ist;
(c) wenigstens einen Spannungsstabilisator, ausgewählt aus substituierten Benzophenonen und gehinderten Aminen.

2. Kabel nach Anspruch 1, wobei das Copolymer (i) ein Propylen/Ethylen-Copolymer ist.

3. Kabel nach Anspruch 1, wobei in dem Copolymer (i) oder Copolymer (ii) oder beiden, wenn heterophasisch, eine elastomere Phase in einer Menge von 45 Gew.-% oder mehr, bezogen auf das Gesamtgewicht des Copolymers, vorhanden ist.

4. Kabel nach Anspruch 1, wobei das Copolymer (i) eine Schmelzenthalpie von 25 J/g bis 80 J/g aufweist.

5. Kabel nach Anspruch 1, wobei das Copolymer (ii) eine Schmelzenthalpie von 10 J/g bis 30 J/g aufweist.

6. Kabel nach Anspruch 1, wobei die wenigstens eine dielektrische Flüssigkeit (b) ein Verhältnis der Zahl von aromatischen Kohlenstoffatomen zu der Gesamtzahl von Kohlenstoffatomen von 0,4 bis 0,9 aufweist.

7. Kabel nach Anspruch 1, wobei die wenigstens eine dielektrische Flüssigkeit einen Anilinpunkt von 50 °C oder niedriger aufweist.

8. Kabel nach Anspruch 1, wobei die wenigstens eine dielektrische Flüssigkeit ausgewählt ist aus: monocyclischen aromatischen Ölen; kondensierten oder unkondensierten polycyclischen aromatischen Ölen; heterocyclischen aromatischen Ölen, die wenigstens ein Heteroatom, ausgewählt aus Sauerstoff, Stickstoff oder Schwefel, enthalten; wobei die mono-, poly- oder heterocyclischen aromatischen Komponenten durch wenigstens eine C₁-C₂₀-Alkylgruppe substituiert sind; und Mischungen davon.

9. Kabel nach Anspruch 1, wobei der wenigstens eine Spannungsstabilisator (c) ausgewählt ist aus: 2,2'-Dihydroxy-4,4'-diacryloxybenzophenon, 2,4-Dihydroxy-benzophenon, 4,4'-Dihydroxybenzophenon, 2,2'-Dihydroxy-4,4'-dimethoxybenzophenon, 2,2'-Dihydroxy-4-methoxybenzophenon, 4,4'-Dimethoxybenzophenon, 2,4'-Dimethylbenzophenon, 3,4'-Dimethylbenzophenon, 3,4-Dimethylbenzophenon, 2,5-Dimethylbenzophenon, 4,4'-Dimethylbenzophenon, 2-Hydroxy-4-methoxybenzophenon, 2-Hydroxy-4-methoxyphenyl-benzophenon, 2-Hydroxy-4-acryloxybenzophenon, 2-Hydroxy-4-octyloxy-benzophenon, 2-Hydroxy-4-allyloxybenzophenon, 2,3,4,4'-Tetrahydroxybenzophenon, 2,2',4,4'-Tetrahydroxybenzophenon, 2,2',4-Tri-hydroxybenzophenon, 2,3,4'-Trihydroxy-benzophenon, 2,4,4'-Trihydroxy-benzophenon, 2,4,6-Trihydroxybenzophenon, 2,3,4-Trimethoxybenzophenon, 2,4,5-Tri-methoxybenzophenon, 2,4,6-Trimethoxybenzophenon, und Mischungen davon.

10. Kabel nach Anspruch 1, wobei der wenigstens eine Spannungsstabilisator (c) aus 2-substituierten Benzophenonen ausgewählt ist.

11. Kabel nach Anspruch 1, wobei der wenigstens eine Spannungsstabilisator (c) aus Hydro-xy-benzophenonen ausgewählt ist.

12. Kabel nach Anspruch 11, wobei der wenigstens eine Spannungsstabilisator aus 2-Hydroxy-benzophenonen ausgewählt ist.

13. Kabel nach Anspruch 1, wobei der wenigstens eine Spannungsstabilisator (c) aus gehinderten Aminen ausgewählt ist.

14. Kabel nach Anspruch 13, wobei der wenigstens eine Spannungsstabilisator (c) ausgewählt ist aus: Bis(2,2,6,6-tetramethyl-4-piperidyl)sebacat; Poly[[6-[(1,1,3,3-tetra-methylbutyl)amino]-1,3,5-triazin-2,4-diyl][(2,2,6,6-tetramethyl-4-piperidinyl)imino]-1,6-hexandiyl[(2,2,6,6-tetramethyl-4-piperidinyl)-imino]]); 1,6-Hexandiamin,N,N'-bis(2,2,6,6-tetramethyl-4-piperidinyl)-Polymer mit 2,4,6-Tri-chlor-1,3,5-triazin, Reaktionsprodukten mit N-Butyl-1-butanamid und N-Butyl-2,2,6,6-tetramethyl-4-piperidinimin (CAS 192268-64-7); 1,3,5-Triazin-2,4,6-triamin,N,N"'-[1,2-ethan-diyl-bis[[[4,6-bis-[butyl-(1,2,2,6,6-pentamethyl-4-piperidinyl)amino]-1,3,5-triazin-2-yl]imino]-3,1-propandi-yl]]-bis-[N',N"-dibutyl-N',N"-bis(1,2,2,6,6-penta-methyl-4-piperidinyl)- (CAS 106990-43-6); Dimethyl-succinat-Polymer mit 4-Hydroxy-2,2,6,6-tetramethyl-1-piperidin-ethanol; Bis-(1-octyloxy-2,2,6,6-tetra-methyl-4-piperidinyl)sebacat; und Mischungen davon.

15. Kabel nach Anspruch 1, wobei der wenigstens eine Spannungsstabilisator (c) in einer Menge von 0,05 bis 5 Gew.-%, bezogen auf das Gesamtgewicht der isolierenden Schicht, vorhanden ist.

16. Kabel nach Anspruch 1, das wenigstens eine halbleitende Schicht aufweist, die wenigstens einen Spannungsstabilisator, ausgewählt aus substituierten Benzophenonen und gehinderten Aminen, umfasst.

## Revendications

1. Câble comprenant au moins un conducteur électrique et au moins une couche électriquement isolante entourant ledit conducteur électrique, dans lequel la au moins une couche électriquement isolante comprend :
(a) un matériau polymère thermoplastique choisi parmi :
- au moins un copolymère (i) de propylène avec au moins un comonomère oléfinique choisi parmi l'éthylène et une α-oléfine différente du propylène, ledit copolymère possédant un point de fusion supérieur ou égal à 130 °C et une enthalpie de fusion de 20 J/g à 90 J/g ;
- un mélange contenant au moins un copolymère (i) et au moins un copolymère (ii) d'éthylène avec au moins une α-oléfine, ledit copolymère (ii) possédant une enthalpie de fusion de 0 J/g à 70 J/g ;
- un mélange contenant au moins un homopolymère de propylène et au moins un copolymère (i) ou un copolymère (ii) ;
au moins un copolymère parmi le copolymère (i) et le copolymère (ii) étant un copolymère hétérophasique ;
(b) au moins un fluide diélectrique intimement mélangé avec le matériau polymère thermoplastique, ledit au moins un fluide diélectrique étant un fluide diélectrique aromatique présentant un rapport entre le nombre d'atomes de carbone aromatique et le nombre total d'atomes de carbone supérieur ou égal à 0,3 ;
(c) au moins un stabilisateur de tension choisi parmi les benzophénones substituées et les amines encombrées.

2. Câble selon la revendication 1, dans lequel le copolymère (i) est un copolymère de propylène/éthylène.

3. Câble selon la revendication 1, dans lequel, dans le copolymère (i) ou le copolymère (ii) ou les deux, quand ils sont hétérophasiques, une phase élastomère est présente en une quantité supérieure ou égale à 45 % en poids par rapport au poids total du copolymère.

4. Câble selon la revendication 1, dans lequel le copolymère (i) possède une enthalpie de fusion de 25 J/g à 80 J/g.

5. Câble selon la revendication 1, dans lequel le copolymère (ii) possède une enthalpie de fusion de 10 J/g à 30 J/g.

6. Câble selon la revendication 1, dans lequel le au moins un fluide diélectrique (b) présente un rapport entre le nombre d'atomes de carbone aromatique et le nombre total d'atomes de carbone de 0,4 à 0,9.

7. Câble selon la revendication 1, dans lequel le au moins un fluide diélectrique possède un point d'aniline inférieur ou égal à 50 °C.

8. Câble selon la revendication 1, dans lequel le au moins un fluide diélectrique est choisi parmi : les huiles aromatiques monocycliques ; les huiles aromatiques polycycliques condensées ou non condensées ; les huiles aromatiques hétérocycliques contenant au moins un hétéroatome choisi parmi l'oxygène, l'azote et le soufre ; lesdits fragments aromatiques mono-, poly-ou hétéro-cycliques étant substitués avec au moins un groupe alkyle en C₁ à C₂₀ ; et leurs mélanges.

9. Câble selon la revendication 1, dans lequel le au moins un stabilisateur de tension (c) est choisi parmi : la 2,2'-dihydroxy-4,4'-diacryloxybenzophénone, la 2,4-dihydroxy-benzophénone, la 4,4'-dihydroxy-benzophénone, la 2,2'-dihydroxy-4,4'-diméthoxy-benzophénone, la 2,2'-dihydroxy-4-méthoxybenzophénone, la 4,4'-diméthoxybenzophénone, la 2,4'-diméthyl-benzophénone, la 3,4'-diméthylbenzophénone, la 3,4-di-méthylbenzophénone, la 2,5-diméthylbenzophénone, la 4,4'-diméthylbenzophénone, la 2-hydroxy-4-méthoxy-benzophénone, la 2-hydroxy-4-méthoxyphényl-benzophénone, la 2-hydroxy-4-acrlyoxybenzophénone, la 2-hydroxy-4-octyloxy-benzophénone, la 2-hydroxy-4-allyloxy-benzophénone, la 2,3,4,4'-tétrahydroxybenzophénone, la 2,2',4,4'-tétrahydroxybenzophénone, la 2,2',4-tri-hydroxybenzophénone, la 2,3,4'-trihydroxy-benzophénone, la 2,4,4'-trihydroxy-benzophénone, la 2,4,6-trihydroxy-benzophénone, la 2,3,4-triméthoxybenzophénone, la 2,4,5-tri-méthoxybenzophénone, la 2,4,6-triméthoxy-benzophénone, et leurs mélanges.

10. Câble selon la revendication 1, dans lequel le au moins un stabilisateur de tension (c) est choisi parmi les benzophénones substituées en position 2.

11. Câble selon la revendication 1, dans lequel le au moins un stabilisateur de tension (c) est choisi parmi les hydroxy-benzophénones.

12. Câble selon la revendication 11, dans lequel le au moins un stabilisateur de tension est choisi parmi les 2-hydroxy-benzophénones.

13. Câble selon la revendication 1, dans lequel le au moins un stabilisateur de tension (c) est choisi parmi les amines encombrées.

14. Câble selon la revendication 13, dans lequel le au moins un stabilisateur de tension (c) est choisi parmi : le sébacate de bis(2,2,6,6,-tétraméthyl-4-pipéridyle) ; le poly[[6-[(1,1,3,3-tétra-méthylbutyl)-amino]-1,3,5-triazine-2,4-diyl][(2,2,6,6-tétraméthyl-4-pipéridinyl)imino]-1,6-hexanediyl[(2,2,6,6-tétraméthyl-4-pipéridinyl)-imino]]) ; un polymère de 1,6-hexane-diamine,N,N'-bis(2,2,6,6-tétraméthyl-4-pipéridinyle) avec la 2,4,6-tri-chloro-1,3,5-triazine, les produits réactionnels avec le N-butyl-1-butanamide et la N-butyl-2,2,6,6-tétraméthyl-4-pipéridinimine (CAS 192268-64-7) ; le 1,3,5-triazine-2,4,6-triamine,N,N"'-[1,2-éthane-diyl-bis[[[4,6-bis-[butyl-(1,2,2,6,6-pentaméthyl-4-pipéridinyl)amino]-1,3,5-triazine-2-yl]imino]-3,1-propanediyl]]bis-[N',N"-dibutyl-N',N"-bis(1,2,2,6,6-penta-méthyl-4-pipéridinyle) - (CAS 106990-43-6) ; un polymère de succinate de diméthyle avec le 4-hydroxy-2,2,6,6-tétraméthyl-1-pipéridine-éthanol ; le sébacate de bis-(1-octyloxy-2,2,6,6-tétra-méthyl-4-pipéridinyle) ; et leurs mélanges.

15. Câble selon la revendication 1, dans lequel le au moins un stabilisateur de tension (c) est présent en une quantité de 0,05 % à 5 % en poids par rapport au poids total de la couche isolante.

16. Câble selon la revendication 1, ayant au moins une couche de semi-conducteur comprenant au moins un stabilisateur de tension choisi parmi les benzophénones substituées et les amines encombrées.
